# EUROPÄISCHE PATENTSCHRIFT

(11) **EP 1 372 932 B1**
(45) Veröffentlichungstag und Bekanntmachung des Hinweises auf die Patenterteilung: **27.10.2004**
(21) Anmeldenummer: 02735135.2
(22) Anmeldetag: 16.03.2002
(51) Int. Cl.: B29C 45/57, B29C 45/20

(54) **VERSCHLIESSBARER DÜSENKÖRPER SOWIE VERFAHREN ZUM VERSCHLUSS DESSELBEN**
CLOSABLE NOZZLE BODY AND METHOD FOR CLOSING THE SAME
CORPS D'AJUTAGE VERROUILLABLE ET PROCEDE PERMETTANT DE LE FERMER

(30) Priorität: 20.03.2001 DE 10113352
(43) Veröffentlichungstag der Anmeldung: 02.01.2004
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: PCT/EP2002/002945
(87) Internationale Veröffentlichungsnummer: WO 2002/074517

(56) Entgegenhaltungen:
- DE-A- 1 554 934
- DE-A- 1 729 391
- PATENT ABSTRACTS OF JAPAN vol. 014, no. 428 (M-1025), 14. September 1990 (1990-09-14) -& JP 02 169219 A (DENSON KK), 29. Juni 1990 (1990-06-29)
- PATENT ABSTRACTS OF JAPAN vol. 004, no. 108 (M-024), 5. August 1980 (1980-08-05) -& JP 55 067434 A (TOSHIBA MACH CO LTD), 21. Mai 1980 (1980-05-21)

## Beschreibung

Die Erfindung betrifft einen verschließbaren Düsenkörper nach dem Oberbegriff des Anspruches 1 sowie ein Verfahren zum Verschluss desselben nach dem Oberbegriff des Anspruchs 11.

### Stand der Technik

Aus der DE 15 54 934 A ist ein Düsenkörper für eine Spritzgießmaschine zur Verarbeitung von Kunststoffen und anderer plastifizierbarer Materialien wie pulvrige oder keramische Massen bekannt, bei dem hydraulisch ein Kolbenschaft bewegt wird, der aus seiner Ausgangsstellung zunächst in die Bohrung eines Mundrings einfährt und damit die Düsenmündung verschließt und anschließend zum Aufbau des Nachdrucks dient. Insofern ist dieser Kolbenschaft zugleich Verschlusselement und Druckelement. Eine Volumenveränderung findet dabei bereits dann statt, wenn der Kolbenschaft in die Verschlussstellung überführt wird.

Aus PATENT ABSTRACT OF JAPAN, vol. 014, no. 428 (M-1025), 14. September 1990 & JP 02 169219 A ist ein Düsenkörper bekannt, der über ein zyklisch einsetzbares Verschluss- und Druckelement verfügt, das im Düsenkörper axial bewegbar ist, um den Nachdruck zu beeinflussen, der die Qualität des Spritzlings maßgeblich beeinflusst. Bei Betätlgung des Druckelements kommt es jedoch zu einer Volumenänderung, was Einfluss auf die Prozessregelung und damit zumindest auch auf die von Zyklus zu Zyklus reproduzierbare Qualität der Spritzlingen hat. Dabei kommt es nicht darauf an, ob wie hier die Betätigung des Druckelements hydraulisch oder mechanisch erfolgt, wie dies aus DE 17 29 391 A oder aus PATENT ABSTRACT OF JAPAN, vol. 004, no. 108 (M-024), 5. August 1980 & JP 55 067434 A bekannt ist.

Aus der GB 976,369 PS ist ebenfalls ein mit einem zyklisch einsetzbaren Verschlusselement bekannt. Das plastifizierte Material wird wechselweise in zwei Formhohlräume eingespritzt, wobei das Verschlusselement den Angußkanal zum einen Formhohlraum freigibt, wenn es den anderen verschließt. Den Angußkanälen ist je eine Druckzylindereinheit zugeordnet, so dass, sobald das Verschlusselement den einen Angußkanal verschließt, die Druckzylindereinheit am zugeordneten Formhohlraum Einfluss auf den Nachdruck nehmen kann, während in den anderen Formhohlraum bereits aufs Neue Material eingespritzt wird. Der damit gewonnene Zeitvorteil beruht allerdings darauf, dass zwei Formhohlräume wechselweise bedient werden, so dass diese Vorrichtung sich nicht auf eine kompakte Düseneinheit übertragen läßt, die eventuell nur einen Formhohlraum bedient.

Ausgehend von diesem Stand der Technik liegt der vorliegenden Erfindung die Aufgabe zugrunde, einen Düsenkörper zu schaffen und ein Verfahren zur Verfügung zu stellen, das bei kompaktem Aufbau den Einfluss des Druckelements auf die Prozessregelung vermindert.

Diese Aufgabe wird durch einen Düsenkörper mit den Merkmalen des Anspruches 1 sowie ein Verfahren mit den Merkmalen des Anspruches 11 gelöst.

Hierzu wird im Düsenkörper außer dem Verschlusselement noch ein Nachdruckraum vorgesehen, der durch ein im Düsenkörper von einem weiteren Betätigungsorgan betätigten Druckelement beeinflussbar ist. Dadurch ist es einerseits möglich, mit dem Betätigungsorgan Einfluss auf diesen Raum und den mit ihm in Verbindung stehenden Formhohlraum zu nehmen, um z.B. den Nachdruck aufzubauen. Andererseits kann aber gleichzeitig vor dem Verschlusselement unabhängig vom Aufbringen des Nachdrucks bereits wieder dosiert werden. Dadurch kann gerade bei PET-Vorformlingen, die meist eine grosse Wandstärke aufweisen und somit eine lange Nachdruckzeit benötigen, diese lange Nachdruckzeit bereits wieder zum Dosieren genutzt werden, so dass die Zykluszeit deutlich reduziert wird. Für die Erfindung ist jedoch nur die Trennung im Düsenkörper wesentlich, so dass von außen angesteuert in der Düse der Nachdruck beeinflussbar, vorzugsweise geregelt beeinflussbar ist, selbst wenn von dieser Option kein Gebrauch gemacht wird. Es wird also eine Trennung von Nachdruck und Materialdruck möglich. Die Trennung von Dosierraum und Nachdruckraum im Düsenkörper führt aber auch dazu, dass das zu dosierende Material über einen längeren Zeitraum und damit gegebenenfalls langsamer dosiert werden kann. Damit wirkt ein kleineres Drehmoment auf die Schnecke ein, so dass das Material weniger Scherkräften unterworfen ist. Dies gewährleistet einen schonenderen Umgang auch mit empfindlichen Materialien.

Durch die Betätigung des Druckelements unabhängig von Düsenkörper und Plastifizierzylinder ist die Nachdruckkraft nicht mehr von der Düsenanlagekraft abhängig. Gleichzeitig wird die Dichtheit bei Düsenanlage erhöht.

Dabei greift das Betätigungsorgan an einem Druckelement an, das im Düsenkanal schwimmend gelagert ist. Dadurch ergibt sich ein kompakter Aufbau, da das Druckelement einerseits zur Beeinflussung des Nachdruckraums regelbar ist, gleichzeitig aber bereits vom neu dosierten Material umströmt werden kann, ohne dass der dabei entstehende Druck die Bewegung des Druckelements behindert.

Weitere Vorteile ergeben sich aus den Unteransprüchen.

Im folgenden wird die Erfindung anhand der beigefügten Figuren näher erläutert. Es zeigen:
- Fig. 1: Eine Seitenansicht einer auf einem Maschinenfuß angeordneten Spritzgießeinheit mit einem erfindungsgemäßen Düsenkörper,
- Fig. 2: einen vergrößerten Schnitt durch den Düsenkörper gemäß Fig. 1 zu Beginn der Formfüllphase,
- Fig. 3: eine Darstellung gemäß Fig. 2 gegen Ende der Formfüllphase,
- Fig. 4: eine Darstellung gemäß Fig. 2 zu Beginn der Nachdruckphase,
- Fig. 5: eine Darstellung gemäß Fig. 2 zu Ende der Nachdruckphase,
- Fig. 6,7: Schnitte durch Fig. 1 entlang der Linien 6-6 bzw. 7-7,

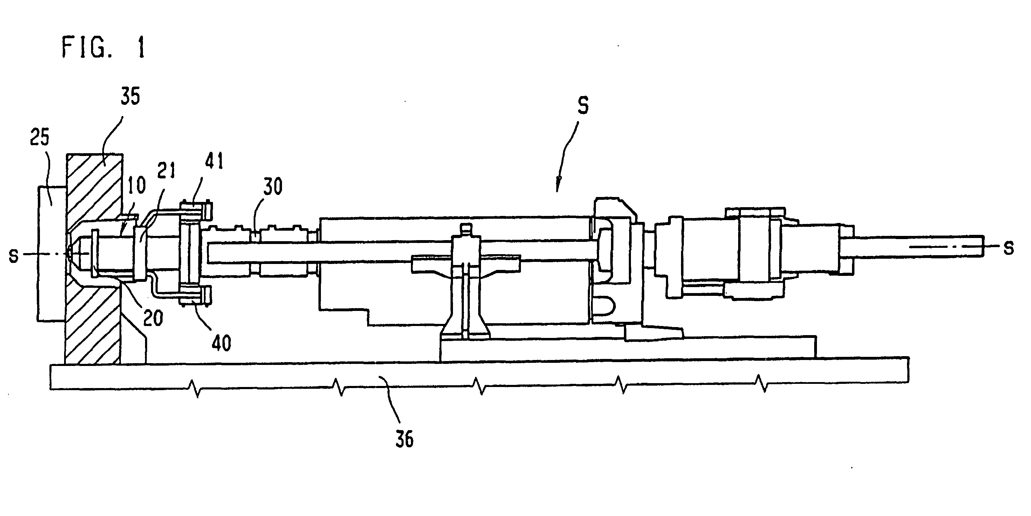

Figur 1 zeigt eine auf einem Maschinenfuß 36 angeordnete Spritzgießeinheit S einer Spritzgießmaschine zur Verarbeitung von Kunststoffen und anderer plastifizierbarer Materialien wie pulvrigen oder keramischen Massen. Die Spritzgießeinheit besitzt einen Plastifizierzylinder 30, an dessen vorderem Ende ein Düsenkörper 10 angeordnet ist. Am Düsenkörper sind als Betätigungselemente für im Innem des Düsenkörpers angeordnete Teile Ringe 20,21 angeordnet, die von Betätigungsorganen 40,41 betätigt werden. Anstelle der Ringe können auch andere Elemente vorgesehen werden, sofern lediglich eine zuverlässige Krafteinleitung in die innerhalb des Düsenkörpers 10 angeordneten Teile möglich ist. Die Spritzgießeinheit S plastifiziert das Material und spritzt es über den Düsenkörper 10 in einen Formhohlraum einer Spritzgießform 25 ein. Zumindest ein Teil der meist mehrteiligen Spritzgießform 25 ist am stationären Formträger 35 befestigt, der gemäß Figur 1 von dem Düsenkörper 10 in einer Durchtrittsöffnung durchgriffen ist.

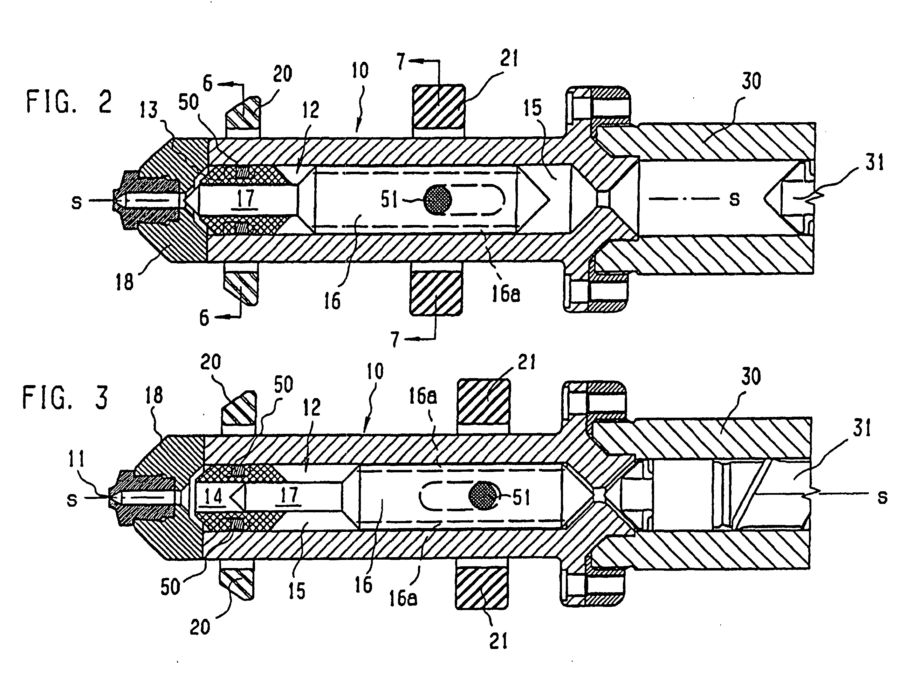

Gemäß den Figuren 2 bis 5 besitzt der Düsenkörper 10 eine Düsenöffnung 11 zum Einspritzen des plastifizierten Materials in die Spritzgießform 25. In der Düsenöffnung 11 mündet ein Düsenkanal 12, der andemends an einem Plastifizierzylinder 30 angeschlossen ist, in dem ein Fördermittel 31, hier eine Förderschnecke, das plastifitierte Material in Richtung auf die Düsenöffnung 11 fördert. Femer ist ein Verschlusselement 13 zum bedarfsweisen Verschluss des Düsenkanals 12 vorgesehen, das von einem Betätigungsorgan 40 betätigt wird. Das Verschlusselement 13 trennt in Verschlussstellung einen mit der Spritzgießform 25 zumindest zeitweise in offener Verbindung stehenden Raum ab. Dieser Raum ist durch ein weiteres Betätigungsorgan 41 beeinflussbar, das dem Düsenkörper 10 zugeordnet ist.

Das Verschlusselement 13 trennt damit in Verschlussstellung im Düsenkörper 10 einen als Nachdruckraum 14 ausgebildeten Raum von einem mit dem Förderelement 31 des Plastifizierzylinders 30 in Verbindung stehenden Dosierraum 15 ab. Dadurch kann der Innendruck und/oder das Volumen des Nachdruckraums 14 unabhängig vom auf der anderen Seite des Verschlusselements stattfindenden Dosieren beeinflusst und im Ausführungsbeispiel mittels eines Druckelements 16 gesteuert oder geregelt werden. Das Druckelement ist vorzugsweise koaxial zu einer durch die Düsenöffnung 11 gehenden Spritzachse s-s im Düsenkörper 10 angeordnet.

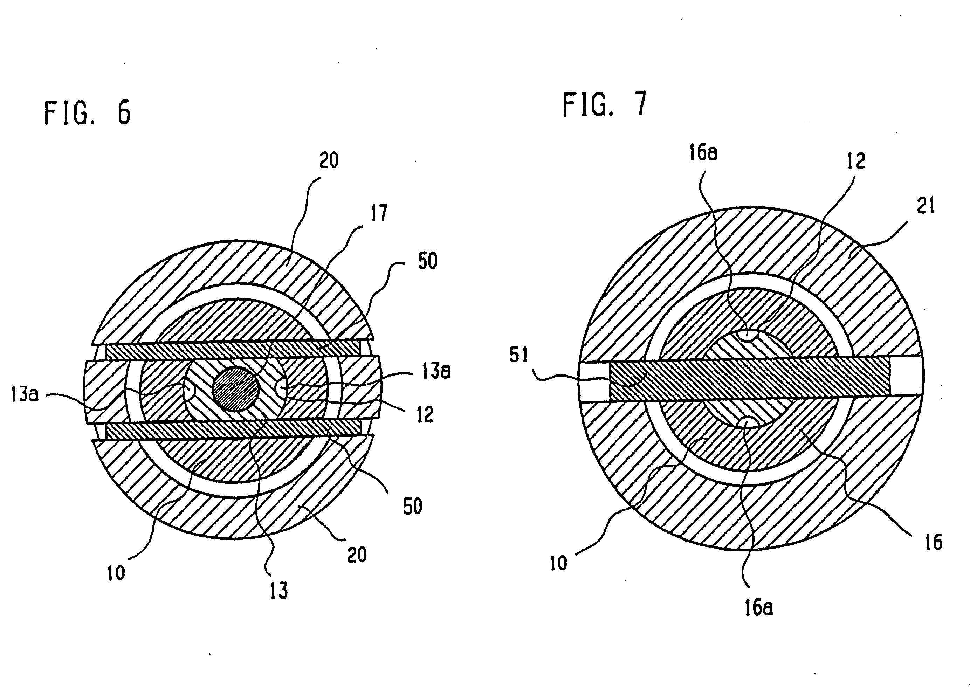

Im Ausführungsbeispiel der Figuren 2 bis 7 ist das Druckelement 16 im Düsenkanal 12 angeordnet und dort begrenzt beweglich. Figur 2 und 7 zeigen, dass der vom Betätigungsorgan 41 betätigte Ring 21 mit einem Betätigungselement 51 mit dem im Düsenkanal 12 angeordneten Druckelement 16 in Wirkverbindung steht. Die maximale Bewegungsmöglichkeit wird durch ein Langloch begrenzt. An seinem vorderen Ende besitzt das Druckelement 16 einen auf den Nachdruckraum 14 einwirkenden Kolben 17, der in diesem Ausführungsbeisplel im Verschlusselement 13 geführt ist. Das Druckelement 16 ist im Düsenkanal 12 schwimmend gelagert, so dass es selbst dann zuverlässig betätigt werden kann, wenn hinter dem Verschlusselement 13 bereits wieder Material gefördert und dosiert wird. Dadurch ergibt sich ein kompakter Aufbau, da das Druckelement einerseits zur Beeinflussung des Nachdruckraums regelbar ist, gleichzeitig aber bereits vom neu dosierten Material umströmt werden kann, ohne dass der dabei entstehende Druck die Bewegung des Druckelements behindert.

Die Bewegung des Druckelements 16 und des damit fest verbundenen Kolbens 17 führt bei geöffnetem Verschlusselement 13 nicht zu einer Volumenänderung, sondem nur zu einer Volumenverschiebung, da die Form von Druckelement 16 und Kolben 17 so ausgebildet ist, dass bei in offener Verbindung stehenden Nachdruckraum 14 und Dosierraum 15 der Druck um das Druckelement herum sich aufhebt. Die offene Verbindung wird durch die Durchtrittskanäle 13a und die Durchströmungskanäle 16a gewährleistet. Aufgrund der schwimmenden Lagerung im Düsenkanal heben sich somit die Kräfte vor und hinter dem Druckelement auf. Die Druckverhältnisse um das Druckelement herum bleiben unverändert, so dass das Druckelement auf die Prozessregelung keinen oder zumindest keinen wesentlichen Einfluss hat. Gleiches gilt grundsätzlich auch bei Betätigung des Verschlusselements 13.

Gemäß Figur 7 besitzt das Druckelement 16 Durchströmungskanäle 16a für den Durchtritt von plastifiziertem Material, die im Ausführungsbeispiel von der Wandung des Düsenkanals 12 begrenzt sind. Die Durchströmungskanäle können aber auch so angeordnet werden, dass sie vollumfänglich im Druckelement zu liegen kommen und keine Berührung mit der Wandung des Düsenkanals 12 eintritt. Wie die Figuren 2 bis 5 zeigen, ist das Verschlusselement 13 in Strömungsrichtung des plastifizierten Materials nach dem Druckelement 16 angeordnet, allerdings liegt sein Kolben 17 parallel zum Druckelement 16. Das Verschlusselement 13 ist ebenfalls im Düsenkanal angeordnet und weist Durchtrittskanäle 13a zum Durchtritt von plastifiziertem Material bis in den Nachdruckraum 14 auf. Diese in Offenstellung gemäß Figur 6 vorhandenen Durchtrittskanäle 13a werden durch eine axiale Bewegung des Verschlusselements 13 an der Wandung des Düsenkanals 12, vorzugsweise stimseitig am Düsenkopf 18, verschlossen. Andere Verschlussmöglichkeiten sind möglich, jedoch hat diese Ausführungsform den Vorteil, dass mit einem geringen Verschlussweg eine verhältnismäßig große Dichtfläche geschaffen wird

In diesem Ausführungsbeispiel arbeitet die Vorrichtung folgendermaßen:

In Figur 2 ist ein Zustand zu Beginn der Füllphase dargestellt. Das Fördermittel 31 befindet sich noch im zurückgezogenen Zustand in Figur 2 rechts. In dem Raum vor dem Fördermittel 31 befindet sich plastifiziertes und dosiertes Material. Das Druckelement 16 ist nach Ende des letzten Zyklus noch nach vome gefahren, während das Verschlusselement nach rechts in seine Offenstellung überführt ist. Bewegt sich nun das Fördermittel 31 in Figur 2 nach links, so wird zunächst Material über die Durchströmungskanäle 16a als auch die Durchtrittskanäle 13a in die Spritzgießform 25 gefördert.

Gegen Ende der Füllphase ergibt sich eine Darstellung gemäß Figur 3. Dabei wurde einerseits das Druckelement 16 nach rechts zurückgezogen oder -geschoben, so dass sich vor dem Kolben 17 des Druckelements 16 ein Nachdruckraum 14 ausbildet. Das Verschlusselement 13 befindet sich immer noch in der offenen Stellung. Die Bewegung des Druckelements 16 und des damit fest verbundenen Kolbens 17 führt bei geöffnetem Verschlusselement 13 nicht zu einer Volumenänderung, sondem nur zu einer Volumenverschiebung. Aufgrund der schwimmenden Lagerung im Düsenkanal heben sich somit die Kräfte vor und hinter dem Druckelement auf. Die Druckverhältnisse um das Druckelement herum bleiben unverändert, so dass das Druckelement auf die Prozessregelung keinen Einfluss hat.

Aber auch das Verschlusselement 13 ist so geformt, dass vor und hinter dem Verschlusselement in Offenstellung die gleichen Kräfte angreifen. Die Bewegung von Druckelement 16 mit Kolben 17 und auch die Bewegung des Verschlusselements sind damit vor allem ohne Einfluss auf das Spritzteil.

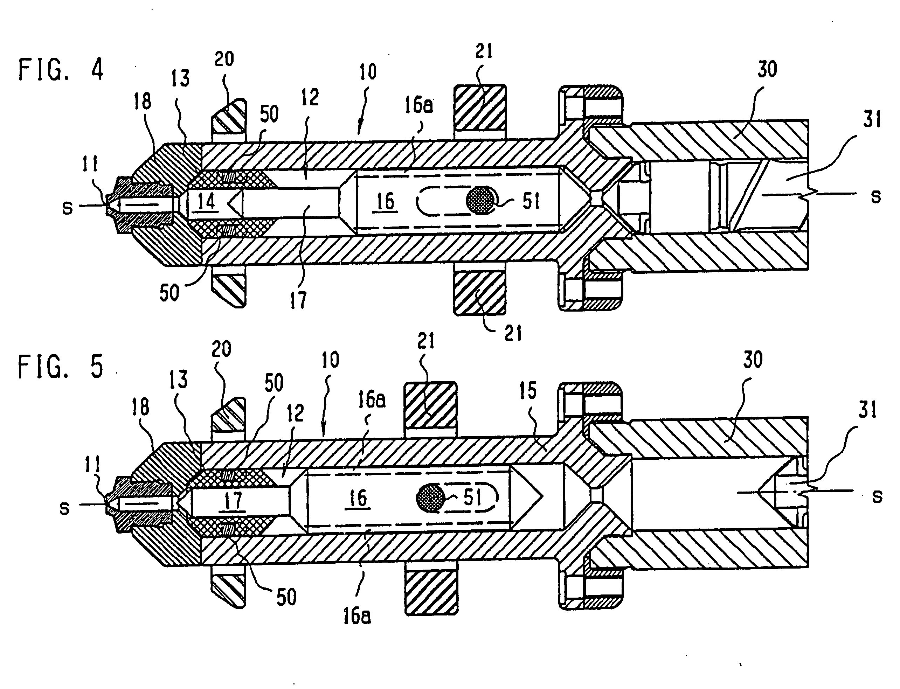

Dieser Druckausgleich ändert sich erst dann, wenn das Verschlusselement gemäß Fig. 4 durch das Betätigungselement 50 in Verbindung mit dem Ring 20 und dem zugehörigen Betätigungsorgan 40 nach links in die Verschlussstellung überführt wird. Der in Figur 3 dort noch vorhandene Kanal wird damit zwischen Verschlusselement 13 und Düsenkopf 18 verschlossen. Von Vorteil ist dabei die verhältnismäßig lange Dichtfläche, im Verhältnis zu einem bloßen Verschluss des Durchtrittskanals 13a.

Jetzt liegt auf der einen Seite des Verschlusselements in Richtung Spritzgießform der Nachdruck und auf der anderen Seite der Dosierdruck an. Aber auch die Druckverhältnisse am Druckelement 16 haben sich geändert, da der Kolben 17 des Druckelements 16 jetzt mit dem Nachdruck beaufschlagt ist. Damit ist eine Trennung erfolgt zwischen dem Nachdruckraum 14 und dem hinter dem Verschlusselement vorhandenen Dosierraum 15. Wird jetzt neues Material dosiert, stellt sich ein gleichmäßiger Druck vor dem Druckelement im Bereich des Düsenkanals 12 und zwischen Verschlusselement und Druckelement 16 ein, da der Kolben 17 jedoch einem anderen Druck unterworfen ist, heben sich die Kräfte um das Druckelement 16 herum nicht mehr auf. Da der Nachdruck und damit die Betätigung des Druckelements 16 mit Kolben 17 über das Betätigungselement 50 und den Ring 20 von außen aufgrund der Istwerte eines Innendrucksensors vorzugsweise in der Spritzgießform erfolgt, ist dies jedoch ohne Konsequenz für das Spritzgießteil, da dies von den Druckverhältnissen um das Druckelement nicht beeinflusst wird.

Dadurch kann sich das Druckelement 16, obwohl es sich im Düsenkanal 12 befindet, als schwimmend gelagertes Element frei bewegen kann. Während also im Dosierraum 15 bereits Material für den nächsten Zyklus dosiert wird, kann durch Betätigung des Druckelements mittels Ring 21 und Betätigungselement 51 noch der Nachdruck aus dem Nachdruckraum 14 heraus aufgebracht werden. Die Bewegung des Druckelements führt nicht zu einer Volumenänderung, sondern nur zu einer Volumenverschiebung, so dass dennoch gleichmäßig hinter dem Verschlusselement dosiert werden kann. Damit ist also ein gleichzeitiges Dosieren und Nachdrücken möglich, so dass die normalerweise z.B. bei PET-Vorformlingen den Zyklus maßgeblich bestimmende lange Nachdruckzeit bereits zum Dosieren des nächsten Zyklus benutzt werden kann. Die damit gegebene Trennung zwischen Dosieren und Nachdruck wird durch die von außen angesteuerten Elemente im Düsenkörper 10 möglich.

Verfahrensgemäß erfolgt ein zyklisches Abtrennen eines Raums im Düsenkörper 10 sowie eine Beeinflussung dieses Raums mittels eines weiteren Betätigungsorgans 41. Dabei bilden sich Nachdruckraum 14 und Dosierraum 15 aus, so dass während der Nachdruckphase der Nachdruckraum 14 gesteuert oder geregelt beeinflussbar ist, während gleichzeitig bereits hinter dem Verschlusselement das Dosieren des nächsten Zyklus beginnen kann.

### Liste der Bezugszeichen

- 10: Düsenkörper
- 11: Düsenöffnung
- 12: Düsenkanal
- 13: Verschlusselement
- 13a: Durchtrittskanal
- 14: Nachdruckraum
- 15: Dosierraum
- 16: Druckelement
- 16a: Durchströmungskanal
- 17: Kolben
- 18: Düsenkopf
- 19: Durchtrittsöffnung
- 20: Ring
- 21: Ring
- 25: Spritzgießform
- 30: Plastfizierzylinder
- 31: Förderelement
- 35: stationärer Formträger
- 36: Maschinenfuß
- 40: Betätigungsorgan
- 41: weiteres Betätigungsorgan
- 50: Betätigungselement
- 51: Betätigungselement
- s-s: Spritzachse
- S: Spritzgießeinheit

## Patentansprüche

1. Düsenkörper (10) für eine Spritzgießmaschine zur Verarbeitung von Kunststoffen und anderen plastifizierbaren Materialien mit
- einer Düsenöffnung (11) zum Einspritzen des plastifizierten Materials in eine Spritzgießform (25),
- wenigstens einem in der Düsenöffnung (11) mündenden Düsenkanal (12) zur Verbindung mit einem Plastifizierzylinder (30),
- wenigstens einem von einem Betätigungsorgan (40) zu betätigenden, im Düsenkörper angeordneten Verschlusselement (13) zum bedarfsweisen Verschluss des Düsenkanals (12), wobei das Verschlusselement (13) in Verschlussstellung zwischen der Spritzgießform (25) und einem damit zumindest zeitweise in offener Verbindung stehenden Nachdruckraum (14) angeordnet ist,
- wenigstens einem weiteren, dem Düsenkörper (10) zugeordneten Betätigungsorgan (41) zur Beeinflussung des Nachdruckraums mittels eines Druckelements (16), das im Düsenkörper (10) angeordnet und unabhängig von Düsenkörper und Plastifizierzylinder (30) betätigbar ist,
**dadurch gekennzeichnet, dass** das gesonderte Druckelement (16) im Düsenkanal (12) begrenzt bewegt werden kann, ohne das dem plastifizierten Material zur Verfügung stehende Volumen zu verändern.

2. Düsenkörper nach Anspruch 1, **dadurch gekennzeichnet, dass** das Verschlusselement (13) in Verschlussstellung zwischen Nachdruckraum (14) und einem mit einem Förderelement (31) eines Plastifizierzylinders (30) in Verbindung stehenden Dosierraum (15) angeordnet ist.

3. Düsenkörper nach Anspruch 1 oder 2, **dadurch gekennzeichnet, dass** das weitere Betätigungsorgan (41) mit dem Druckelement (16) in Wirkverbindung steht, wobei das Druckelement vorzugsweise einstückig mit einem Kolben (17) ist.

4. Düsenkörper nach einem der vorhergehenden Ansprüche, **dadurch gekennzeichnet, dass** das Druckelement (16) koaxial zu einer durch die Düsenöffnung (11) gehenden Spritzachse (s-s) im Düsenkanal (12) des Düsenkörpers (10) angeordnet ist

5. Düsenkörper nach einem der vorhergehenden Ansprüche, **dadurch gekennzeichnet, dass** bei geöffnetem Verschlusselement (13) der infolge des unter Druck stehenden plastifizierten Materials auf die Außenflächen von Druckelement (16) mit Kolben (17) bzw. auf die Außenflächen des Verschlusselements (13) aus Richtung der Düsenöffnung (11), also von vom wirkende Druck gleich dem auf die Außenflächen des Druckelements von hinten infolge des Drucks des plastifizierten Materials wirkenden Druck ist.

6. Düsenkörper nach einem der vorhergehenden Ansprüche, **dadurch gekennzeichnet, dass** der auf den Nachdruckraum (14) einwirkende Kolben (17) im Verschlusselement (13) geführt ist.

7. Düsenkörper nach einem der vorhergehenden Ansprüche, **dadurch gekennzeichnet, dass** das Druckelement (16) Durchströmungskanäle (16a) für den Durchtritt von plastifiziertem Material aufweist, die von der Wandung des Düsenkanals (12) begrenzt sind.

8. Düsenkörper nach einem der vorhergehenden Ansprüche, **dadurch gekennzeichnet, dass** das Verschlusselement (13) in Strömungsrichtung des plastifizierbaren Materials nach dem Druckelement (16), jedoch parallel zu dessen Kolben (17) angeordnet ist.

9. Düsenkörper nach einem der vorhergehenden Ansprüche, **dadurch gekennzeichnet, dass** das Verschlusselement (13) im Düsenkanal (12) angeordnet ist und in Offenstellung Durchtrittskanäle (13a) für plastifiziertes Material aufweist.

10. Düsenkörper nach Anspruch 9 **dadurch gekennzeichnet, dass** die Durchtrittskanäle (13a) durch eine axiale Bewegung des Verschlusselements (13) an der Wandung des Düsenkanals (12), vorzugsweise stimseitig am Düsenkopf (18) verschließbar sind.

11. Verfahren zum Verschluss eines Düsenkörpers (10) für eine Spritzgießmaschine zur Verarbeitung von Kunststoffen und anderen plastifizierbaren Materialien, wobei im Düsenkörper (10) mittels eines von einem Betätigungsorgan (40) betätigbaren Verschlusselements (13) zyklisch ein Raum abgetrennt wird und wobei in Verschlussstellung des Verschlusselements der Nachdruckraum (14) mittels eines weiteren Betätigungsorgans (41) mit einem Druckelement (16) beeinflusst wird, das im Düsenkörper (10) unabhängig von Düsenkörper und Plastifizierzylinder (30) betätigt wird,
**dadurch gekennzeichnet, dass** das gesonderte Druckelement (16) im Düsenkanal (12) ohne Volumenveränderung des das Druckelement umgebenden plastifizierten Materials bewegt wird.

12. Verfahren nach Anspruch 11, **dadurch gekennzeichnet, dass** der Verschluss des Düsenkanals (12) mittels des Verschlusselements (13) vor der Nachdruckphase erfolgt und dass das weitere Betätigungsorgan den Nachdruck in der Spritzgießform (25) durch Beeinflussung des Nachdruckraums (14) regelt.

13. Verfahren nach Anspruch 11 oder 12, **dadurch gekennzeichnet, dass** das weitere Betätigungsorgan (41) den Innendruck und/oder das Volumen des Nachdruckraumes (14) mittels des Druckelements (16) regelt.

14. Verfahren nach einem der Ansprüche 11 bis 13, **dadurch gekennzeichnet, dass** während der Beeinflussung des Raums in Verschlussstellung des Verschlusselements (13) zumindest zeitweise gleichzeitig plastifiziertes Material im Dosierraum (15) dosiert wird.

15. Verfahren nach einem der Ansprüche 11 bis 14, **dadurch gekennzeichnet, dass** das Druckelement (16) und/oder das Verschlusselement (13) bei geöffnetem Verschlusselement im Düsenkanal (12) ohne Volumenveränderung des das Druckelement umgebenden plastifizierten Materials bewegt wird.

16. Verfahren nach einem der Ansprüche 11 bis 15, **dadurch gekennzeichnet, dass** sich die Kräfte um das Druckelement (16) herum aufheben.

## Claims

1. Nozzle body (10) for an injection moulding machine for processing plastic materials and other plastifiable materials, having
- a nozzle opening (11) for injecting the plastified material into an injection mould (25),
- at least one nozzle channel (12) discharging in the nozzle opening (11) for connection to a plastifying cylinder (30)
- at least one closure element (13), which is to be actuated by an actuation member (40) and is disposed in the nozzle body, for closure, if required, of the nozzle channel (12), wherein the closure element (13) in closure position is arranged between the injection mould and a holding pressure chamber (14) which is in open communication at least at times with the injection mould (25),
- at least one further actuation member (41) associated with the nozzle body (10) for influencing the holding pressure chamber by means of a pressure element (16), which is disposed in the nozzle body (10) and is actuatable independently of the nozzle body and the plastifying cylinder (30)
**characterised in that** the separate pressure element (16) is adapted to be moved in the nozzle channel (12) in a limited fashion without changing the volume available to the plastified material.

2. Nozzle body according to claim 1, **characterised in that** the closure element (13) is arranged in closure position between the holding pressure chamber (14) and a dosing chamber (15) which is connected to a feeding means (31) of a plastifying cylinder (30).

3. Nozzle body according to claim 1 or 2, **characterised in that** the further actuation member (41) is in operative connection with the pressure element (16) which is preferably in one piece with a piston (17).

4. Nozzle body according to one of the preceding claims, **characterised in that** the pressure element (16) is arranged coaxially to an injection axis (s-s) going through the nozzle opening (11), in the nozzle channel (12) of the nozzle body (10).

5. Nozzle body according to one of the preceding claims, **characterised in that**, when the closure element (13) is open, the pressure acting as a result of the plastified material being under pressure upon the outer faces of the pressure element (16) with piston (17) or upon the outer faces of the closure element (13), respectively, from the direction of the nozzle opening (11), i.e. by pressure acting from the front, is equal to that upon the outer faces of the pressure element from the rear as a result of the pressure of the plastified material.

6. Nozzle body according to one of the preceding claims, **characterised in that** the piston (17) acting on the holding pressure chamber (14) is guided in the closure element (13).

7. Nozzle body according to one of the preceding claims, **characterised in that** the pressure element (16) comprises through-flow channels (16a) for the passage of plastified material, said channels being delimited by the wall of the nozzle channel (12).

8. Nozzle body according to one of the preceding claims, **characterised in that** the closure element (13) is disposed in the flow direction of the plastifiable material after the pressure element (16) but parallel to its piston ( 17).

9. Nozzle body according to one of the preceding claims, **characterised in that** the closure element (13) is disposed in the nozzle channel (12) and has passage channels (13a) for plastified material in the open position.

10. Nozzle body according to claim 9, **characterised in that** the passage channels (13a) can be closed by an axial movement of the closure element (13) on the wall of the nozzle channel (12), preferably at the end-side on the nozzle head (18).

11. Method for closing a nozzle body (10) for an injection moulding machine for processing plastic materials and other plastifiable materials wherein a chamber is separated cyclically in the nozzle body (10) by means of a closure element (13) actuated by an actuation member (40) and wherein, in the closure position of the closure element, the holding pressure chamber (14) is influenced by means of a further actuation member (41) with a pressure element (16) being actuated in the nozzle body (10) independently of the nozzle body and the plastifying cylinder (30),
**characterised in that** the separate pressure element (16) is moved in the nozzle channel (12) without a change in volume of the plastified material surrounding the pressure element.

12. Method according to claim 11, **characterised in that** the closure of the nozzle channel (12) is effected by means of the closure element (13) before the holding pressure phase and **in that** the further actuation member controls the holding pressure in the injection mould (25) by influencing the holding pressure chamber (14).

13. Method according to claim 11 or 12, **characterised in that** the further actuation member (41) controls the internal pressure and/or the volume of the holding pressure chamber (14) by means of the pressure element (16).

14. Method according to one of the claims 11 to 13, **characterised in that**, during influencing of the holding pressure chamber in the closure position of the closure element (13) plastified material can be dosed simultaneously in the dosing chamber (15) at least at times.

15. Method according to one of the claims 11 to 14, **characterised in that** the pressure element (16) and/or the closure element (13) is movable in the nozzle channel (12) when the closure element is open, without a change in volume of the plastified material surrounding the pressure element.

16. Method according to one of the claims 11 to 15, **characterised in that** the forces around the pressure element (16) are cancelled out.

## Revendications

1. Corps de filière (10) pour une machine à mouler par injection pour le traitement de matières plastiques et d'autres matériaux plastifiables, comportant
- une ouverture de filière (11 ) pour injecter le matériau plastifié dans un moule d'injection (25),
- au moins un canal de filière (12) débouchant dans l'ouverture de filière (11) pour la liaison avec un cylindre de plastification (30),
- au moins un élément d'obturation (13) disposé dans le corps de filière, à actionner au moyen d'un organe d'actionnement (40), pour au besoin obturer le canal de filière (12), l'élément d'obturation (13) en position de fermeture étant disposé entre le moule d'injection (25) et une chambre de maintien en pression (14) en liaison ouverte avec celui-ci, au moins par moments,
- au moins un autre organe d'actionnement (41 ), associé au corps de filière (10), pour agir sur la chambre de maintien en pression au moyen d'un élément de pression (16) qui est disposé dans le corps de filière (10) et peut être actionné indépendamment du corps de filière et du cylindre de plastification (30),
**caractérisé en ce que** l'élément de pression (16) séparé peut être déplacé dans une mesure limitée dans le canal de filière (12), sans modifier le volume disponible pour le matériau plastifié.

2. Corps de filière selon la revendication 1, **caractérisé en ce que** l'élément d'obturation (13) en position fermée, est disposé entre la chambre de maintien en pression (14) et une chambre de dosage (15) en liaison avec un élément de transport (31) d'un cylindre de plastification (30).

3. Corps de filière selon la revendication 1 ou 2, **caractérisé en ce que** l'autre organe d'actionnement (41) est en liaison active avec l'élément de pression (16), l'élément de pression étant de préférence d'un seul tenant avec un piston (17).

4. Corps de filière selon l'une des revendications précédentes, **caractérisé en ce que** l'élément de pression (16) est disposé coaxialement à un axe d'injection (s-s), traversant l'ouverture de filière (11), dans le canal de filière (12) du corps de filière (10).

5. Corps de filière selon l'une des revendications précédentes, **caractérisé en ce que** lorsque l'élément d'obturation (13) est ouvert, la pression agissant, par suite du matériau plastifié sous pression, sur les surfaces extérieures de l'élément de pression (16) avec piston (17), ou sur les surfaces extérieures de l'élément d'obturation (13), depuis la direction de l'ouverture de filière (11), c'est-à-dire depuis l'avant, est égale à la pression agissant sur les surfaces extérieures de l'élément de pression de l'arrière, par suite de la pression du matériau plastifié.

6. Corps de filière selon l'une des revendications précédentes, **caractérisé en ce que** le piston (17), agissant sur la chambre de maintien en pression (14), est guidé dans l'élément d'obturation (13).

7. Corps de filière selon l'une des revendications précédentes, **caractérisé en ce que** l'élément de pression (16) comporte des canaux d'écoulement (16a) pour le passage du matériau plastifié, lesquels sont délimités par la paroi du canal de filière (12).

8. Corps de filière selon l'une des revendications précédentes, **caractérisé en ce que** l'élément d'obturation (13) est disposé, dans le sens d'écoulement du matériau plastifiable, en aval de l'élément de pression (16), mais parallèlement à son piston (17).

9. Corps de filière selon l'une des revendications précédentes, **caractérisé en ce que** l'élément d'obturation (13) est disposé dans le canal de filière (12) et comporte, en position ouverte, des canaux de passage (13a) pour le matériau plastifié.

10. Corps de filière selon la revendication 9, **caractérisé en ce que** les canaux de passage (13a) peuvent être fermés par un mouvement axial de l'élément d'obturation (13) sur la paroi du canal de filière (12), de préférence sur le côté frontal de la tête de filière (18).

11. Procédé de fermeture d'un corps de filière (10) pour une machine à mouler par injection pour le traitement de matières plastiques et d'autres matériaux plastifiables, dans le corps de filière (10) une chambre étant séparée cycliquement au moyen d'un élément d'obturation (13) pouvant être actionné par un organe d'actionnement (14), et en position de fermeture de l'élément d'obturation, la chambre de maintien en pression (14) étant influencée au moyen d'un autre organe d'actionnement (41) avec un élément de pression (16) qui est actionné dans le corps de filière (10), indépendamment du corps de filière et du cylindre de plastification (30),
**caractérisé en ce que** l'élément de pression (16) séparé est déplacé dans le canal de filière (12) sans variation du volume du matériau plastifié entourant l'élément de pression.

12. Procédé selon la revendication 11, **caractérisé en ce que** la fermeture du canal de filière (12) s'effectue au moyen de l'élément d'obturation (13) avant la phase de maintien en pression, et **en ce que** l'autre organe d'actionnement régule la pression de maintien dans le moule d'injection (25) en agissant sur la chambre de maintien en pression (14).

13. Procédé selon la revendication 11 ou 12, **caractérisé en ce que** l'autre organe d'actionnement (41) régule la pression intérieure et/ou le volume de la chambre de maintien en pression (14) au moyen de l'élément de pression (16).

14. Procédé selon l'une des revendications 11 à 13, **caractérisé en ce que** pendant l'action sur la chambre, en position fermée de l'élément d'obturation (13), du matériau plastifié est dosé simultanément, au moins par moments, dans la chambre de dosage (15).

15. Procédé selon l'une des revendications 11 à 14, **caractérisé en ce que** l'élément de pression (16) et/ou l'élément d'obturation (13) sont déplacés, lorsque l'élément d'obturation est ouvert, dans le canal de filière (12), sans variation du volume du matériau plastifié entourant l'élément de pression.

16. Procédé selon l'une des revendications 11 à 15, **caractérisé en ce que** les forces autour de l'élément de pression (16) s'annulent.
